# EUROPEAN PATENT SPECIFICATION

(11) **EP 3 075 616 B1**
(45) Date of publication and mention of the grant of the patent: **18.12.2019**
(21) Application number: 16162253.5
(22) Date of filing: 24.03.2016
(51) Int. Cl.: B60T 7/12, B60W 30/18

(54) **METHOD OF PREVENTING CONSTRUCTION MACHINE FROM ROLLING BACKWARD AND APPARATUS FOR PERFORMING THE SAME**
VERFAHREN ZUR VERHINDERUNG DES RÜCKWÄRTSROLLENS EINER BAUMASCHINE UND VORRICHTUNG ZUR DURCHFÜHRUNG DES VERFAHREN
PROCÉDÉ PERMETTANT D'EMPÊCHER UN RETOUR EN ARRIÈRE D'UNE MACHINE DE CONSTRUCTION ET APPAREIL À CET EFFET

(30) Priority: 27.03.2015 KR 20150043043
(43) Date of publication of application: 05.10.2016
(73) Proprietor: Doosan Infracore Co., Ltd., Incheon 22502 (KR)
(72) Inventor: KIM, Ji Hoon, Seoul 03737 (KR)
(74) Representative: Isarpatent

(56) References cited:
- WO-A1-02/062640
- DE-A1-102012 206 147
- DE-A1-102013 006 688
- GB-A- 2 483 719
- GB-A- 2 510 807
- JP-A- 2002 283 984
- US-A1- 2004 024 513
- US-A1- 2005 246 081
- US-A1- 2011 166 756
- US-A1- 2014 277 980

## Description

### [Technical Field]

The present disclosure relates to a method of preventing a wheel construction machine from rolling backward on a slope, and an apparatus for performing the method.

### [Background Art]

In general, a construction machine includes a lower travelling body, an upper turning body provided to be turnable on the lower travelling body, and an operating device provided at the upper turning body. The operating device includes a boom structure, an arm structure, a bucket, and the like, and the bucket may be replaced with an attachment. The attachment may include a braker, a crusher, and the like.

According to the related arts, when a construction machine moves upward on a slope in a stop state, the construction machine may roll backward by self-weight of the construction machine, so that a safety accident may be generated. When the rolling-backward of the construction machine is severe, the construction may be even turned over.

In the meantime, a gyro sensor may be provided in a vehicle for riding or transporting, and a degree of inclination of the corresponding vehicle may be recognized from the gyro sensor. Further, it is possible to determine whether a position, at which the vehicle is currently located, is a slope based on the degree of inclination of the vehicle.

When it is determined that the vehicle is located on the slope, a brake is operated for about two seconds when the vehicle starts in a stop state, thereby preventing the vehicle from arbitrarily rolling backward. In the meantime, the vehicle does not need to consider whether a travelling direction is a forward direction or a backward direction.

However, since the construction machine needs to be able to perform an operation while moving, it may be difficult to operate the brake for two seconds by applying the gyro sensor.

In the meantime, in the construction machine, the upper body is turnable with respect to the lower body, so that a driver may intentionally take a pose for turning the upper body in the lower body.

More particularly, in the construction machine, a direction of the lower body may be matched to a direction of the upper body, and a direction of the lower body may not be matched to a direction of the upper body by turning the upper body in the lower body.

Further, the construction machine needs to perform an operation while repeating a movement and a stop in a state of maintaining a corresponding pose regardless of the kind of pose. That is, the operation of the brake for two seconds when the vehicle starts after the stop like the aforementioned vehicle may disturb the operation.

For example, when it is assumed that a gyro sensor is mounted to the upper body of the construction machine, in a pose of the lower body of the construction machine heading a down side of a slope, the construction machine may be reversed up and down the slope, and in this case, the brake is unconditionally operated for two seconds, so that there is inconvenience and a safety accident may be caused.

Accordingly, it may be difficult to apply the technology using a gyro sensor, which is applied to a vehicle in the related art, to the construction machine.

### [Related art literature]

### [Patent Document]

Patent document DE 10 2012 206147 A1 discloses a method for operating a drive device of a motor vehicle. The device has an electric or hydraulic machine as a drive unit. The method consists of the following steps: determining a target drive direction that can be set by the driver of the vehicle, detecting a current direction of travel of the vehicle and comparing the current drive direction with the target drive direction that has been set, detecting the direction of action of a current drive force and comparing the direction of action with the target drive direction, if the current direction of travel deviates from the target drive direction.

Patent document US 2004/0024513 A1 discloses an automatic brake device for a vehicle. When the vehicle stops, a brake control unit maintains a braking force applied on a wheel by a braking-force application unit for maintaining a halted state. In this state, if a driver depresses the accelerator pedal to execute starting of the vehicle, the braking force is gradually decreased, and the vehicle starts at a speed that accords with a degree of an accelerator opening and a gradient of a road on which the vehicle is stopped. When a movement direction at this time is the same as a movement direction intended by the driver, the braking force is decreased to zero for smooth starting. When the movement direction is opposite to the intended movement direction, the braking force is increased to control the movement in the opposite direction, such that the movement changes from the opposite direction to the same direction, and finally, smooth starting in the desired direction is executed

Patent document GB 2 483 719 A discloses a brake control system which comprises brake actuation means for actuating the brakes to supply a braking effort; and brake control means for controlling the brake actuation means, wherein the brake control means is arranged to detect the selection of a drive gear and, when a drive gear is selected, to limit a movement of the vehicle in a direction opposed to the intended direction of movement associated with the selected drive gear by ensuring that the brake actuation means supplies a braking effort. The braking effort may be for a predetermined period of time, which may be extended if the drive torque is below a predetermined level. The brake means may provide a braking effort when the vehicle moves at a speed or acceleration above a predetermined limit.

Patent document GB 2 510 807 A discloses a method of controlling force transmitted to a ground engaging member of a vehicle including receiving an electrical indication that a first brake is engaged, such as by a user pressing his foot to a service brake. The method further includes electrically transmitting an instruction to apply force restricting movement of the wheels, such as force exerted from a brake, in an amount above a first threshold, such as an amount necessary to unilaterally prevent movement. The method also includes electrically transmitting an instruction to reduce force being applied to the wheels from a transmission while the brake force above the first threshold is applied.

### [Patent Document]

Korean Patent No. 10-0771961 (October 25, 2007)

### [Disclosure]

### [Technical Problem]

The present disclosure provides an apparatus for preventing a construction machine from rolling backward on a slope.

The present disclosure also provides an apparatus for preventing a construction machine from rolling backward by automatically operating a brake only when any one travelling signal selected from a forward travelling signal and a reverse travelling signal selected by a travel lever is different from a rotation direction of a travelling motor.

The present disclosure also provides an apparatus for preventing a construction machine from rolling backward by automatically operating a brake on a slope when an acceleration signal by an accelerator pedal does not reach a predetermined value.

The present disclosure also provides an apparatus for preventing a construction machine from rolling backward, in which additional cost for preventing the construction machine from rolling backward is not generated and convenience and stability of a driver may be improved.

### [Technical Solution]

An exemplary embodiment of the present disclosure provides an apparatus for preventing a construction machine from rolling backward, the apparatus including: a travel lever configured to generate any one travelling signal 12 between a forward travelling signal and a backward travelling signal; a travelling motor configured to generate any one rotation signal 14 between a forward-direction rotation signal and a reverse-direction rotation signal; an accelerator pedal configured to generate an acceleration signal 16; a brake 30 configured to apply braking to the traveling motor; and a control unit 20 configured to control the brake 30, in which the travelling signal 12, the rotation signal 14, and the acceleration signal 16 are input into the control unit 20, and when it is determined that the rotation signal 14 is mismatched to the travelling signal 12, the control unit 20 controls the brake 30 so that the brake 30 is operated, and when travelling tractive force is secured, the control unit 20 controls the brake 30 so that the operation of the brake 30 is released, and when the rotation signal is not matched with the travelling signal, the control unit 20 outputs a message inducing stepping of a brake pedal.

The security of the travelling tractive force may include that the accelerator pedal reaches a range from 60% to 80% of a maximum operation range of the accelerator pedal.

The apparatus may further include a rotation detecting sensor configured to output the rotation direction as the rotation signal 14.

When the rotation signal is not matched with the travelling signal, the control unit may make the brake be operated until a predetermined time elapses.

The predetermined time may be 0.5 second to 1.5 seconds.

In the construction machine, a lower travelling body may be a wheel type.

Another exemplary embodiment of the present disclosure provides a method of preventing a construction machine from rolling backward, the method including: detecting a travelling direction of a construction machine; confirming whether the detected travelling direction is an intended travelling direction of a driver of the construction machine; and controlling the brake so that the brake is operated when the detected travelling direction is not matched with the intended travelling direction of the driver, and controlling the brake so that the operation of the brake is released when travelling tractive force is secured, and when the detected travelling direction is not matched with the intended travelling direction of the driver, outputting a message inducing stepping of the brake pedal.

The security of the travelling tractive force may include that the accelerator pedal reaches a range from 60% to 80% of a maximum operation range of the accelerator pedal.

The detecting of the travelling direction of the construction machine may include detecting a rotation direction of a travelling motor.

The method may further include when the detected travelling direction is not matched with the intended travelling direction of the driver, operating the brake until a predetermined time elapses.

In the construction machine, a lower travelling body may be a wheel type.

### [Advantageous Effects]

According to the present disclosure, only when an intended travelling direction of a driver on a slope is not matched with an actual travelling direction of the construction machine, it is possible to brake the traveling motor, and when an acceleration signal is input, it is possible to release the braking of the travelling motor in a situation where travelling tractive force is secured.

Accordingly, when the construction machine intends to climb up the slope, the brake is operated until the travelling tractive force is secured, so that it is possible to suppress the construction machine from rolling backward on the slope.

Further, according to the present disclosure, cost for preventing the construction machine from rolling backward may not be generated, and it is possible to improve convenience of the driver and stability.

### [Description of Drawings]

FIG. 1 is a block diagram illustrating an apparatus for preventing a construction machine from rolling backward according to an exemplary embodiment of the present disclosure.
FIG. 2 is a flowchart illustrating a method of preventing a construction machine from rolling backward by using the apparatus illustrated in FIG. 1.
FIG. 3 is a diagram for describing a process of operating a brake by the apparatus for preventing the construction machine from rolling backward according to the exemplary embodiment of the present disclosure.
FIG. 4 is a diagram for describing a process of releasing the brake by the apparatus for preventing the construction machine from rolling backward according to the exemplary embodiment of the present disclosure.
FIGS. 5 and 6 are diagrams for describing a release time of the brake when an accelerator pedal is stepped in the apparatus for preventing the construction machine from rolling backward according to the exemplary embodiment of the present disclosure.

### [Best Mode]

Hereinafter, exemplary embodiments of the present disclosure will be described in detail with reference to the accompanying drawings.

The present disclosure may be variously modified and have various forms, so that specific exemplary embodiments will be illustrated in the drawings and described in detail in the text. In the description of respective drawings, similar reference numerals designate similar elements.

Terms used in the present application are used only to describe specific exemplary embodiments, and are not intended to limit the present disclosure. As used herein, the singular forms are intended to include the plural forms as well, unless the context clearly indicates otherwise. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other specific characteristics, numbers, steps, operations, constituent elements, and components, or a combination thereof in advance.

All terms used herein including technical or scientific terms have the same meanings as meanings which are generally understood by those skilled in the art unless they are differently defined. Terms defined in generally used dictionary shall be construed to have meanings matching those in the context of a related art, and shall not be construed in ideal or excessively formal meanings unless they are clearly defined in the present application.

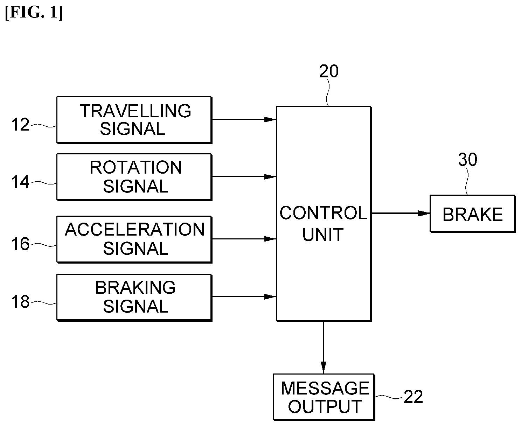

Hereinafter, an apparatus for preventing a construction machine from rolling backward according to an exemplary embodiment of the present disclosure will be described with reference to FIG. 1. FIG. 1 is a block diagram illustrating an apparatus for preventing a construction machine from rolling backward according to an exemplary embodiment of the present disclosure.

Referring to FIG. 1, a method of preventing a construction machine from rolling backward according to an exemplary embodiment of the present disclosure and an apparatus for performing the same may include a travel lever, a travelling motor, an accelerator, a control unit 20, and a brake 30. The control unit 20 may be a vehicle control unit (VCU).

In the present exemplary embodiment, in the construction machine, a lower travelling body may be a wheel type. The construction machine includes a travelling motor, a transmission, and wheels. Power generated by the travelling motor is transferred to the wheels via the transmission, so that the wheels may be driven and the construction machine may be travelled. Further, the construction machine may travel forward or backward according to a driving direction of the wheel.

A driver may select a forward travelling or a backward travelling by operating the travel lever according to an intention of the driver. That is, when the driver selects any one of the forward travelling and the backward travelling signals for the purpose of selecting a travelling direction, a travelling signal 12 may be generated. The generated travelling signal 12 is input into the control unit 20. Further, the driver may operate a travelling pedal instead of the travel lever, and the travelling signal 12 may also be generated according to an operation direction of the travelling pedal.

In the meantime, the travelling motor is operated by working oil provided from a hydraulic pump. The travelling motor may be rotated in a forward direction or in a reverse direction according to a flow direction of the working oil. Further, when the rotation direction of the travelling motor is the forward direction, the construction machine may perform the forward travelling based on the lower body of the construction machine.

By contrast, when the rotation direction of the travelling motor is the reverse direction, the construction machine may perform the backward travelling based on the lower body of the construction machine.

O the other hand, when a pressure of the working oil provided to the travelling motor is lower than an appropriate pressure, the travelling motor may not be rotated in a desired rotation direction. Even when the construction machine rolls backward in a gravity direction due to self-weight of the construction machine on a slope, the travelling motor may be rotated in an opposite direction to a desired rotation direction.

In this case, an abnormal pattern may be formed in a change of pressure in a hydraulic circuit line connected to the travelling motor. The abnormal pattern may be a phenomenon in which an appropriate high pressure needs to be formed in a supply line, through which the working oil is provided to the travelling motor, but even though the working oil is supplied, a pressure of the supply line is decreased or is not increased.

When the abnormal pattern is generated, the control unit 20 may determine that the travelling signal 12 and a rotation signal 14 are "mismatched".

On the other hand, a rotation detecting sensor may also be provided in the travelling motor. The rotation detecting sensor may detect a rotation direction of the travelling motor, output the detected rotation direction as the rotation signal 14, and provide the rotation signal 14 to the control unit 20.

Accordingly, the control unit 20 may recognize information on the rotation direction of the travelling motor during the operation of the travelling motor.

In the meantime, the construction machine may be accelerated by stepping the accelerator pedal. When the accelerator pedal is stepped, an acceleration signal 16 is generated according to the operation of the accelerator pedal. In the meantime, according to a degree of stepping the accelerator pedal, for example, when the accelerator pedal is deeply stepped, an intensity of the acceleration signal 16 may be increased. The acceleration signal 16 may be input into the control unit 20.

Further, the construction machine includes the brake. The brake 30 may be operated by stepping the brake pedal. Further, the brake 30 may be operated by a control command of the control unit 20.

When the brake pedal is stepped, a braking signal 18 may be generated according to an operation of the brake 30. The braking signal 18 may be input into the control unit 20.

The control unit 20 may recognize whether the construction machine travels in an intended direction of the driver based on the travelling signal 12 and the rotation signal 14.

This will be additionally described below.

When the travelling signal 12 is the forward travelling signal and the rotation signal 14 indicates the forward direction, the construction machine may travel in an intended direction of the driver, so that the control unit 20 may understand that the travelling signal 12 and the rotation signal 14 are "matched".

Further, when the travelling signal 12 is the backward travelling signal and the rotation signal 14 indicates the reverse direction, the construction machine may travel in an intended direction of the driver, so that the control unit 20 may understand that the travelling signal 12 and the rotation signal 14 are "matched".

By contrast, when the travelling signal 12 is the forward travelling signal and the rotation signal 14 indicates the reverse direction, the construction machine may not travel in an intended direction of the driver and may roll backward, so that the control unit 20 may understand that the travelling signal 12 and the rotation signal 14 are "mismatched".

Further, when the travelling signal 12 is the reverse travelling signal and the rotation signal 14 indicates the forward direction, the construction machine may not travel in an intended direction of the driver and may roll backward, so that the control unit 20 may understand that the travelling signal 12 and the rotation signal 14 are "mismatched".

As described above, the control unit 20 may recognize whether the construction machine travels in the intended direction of the driver and whether the construction machine is in a rolling-backward situation according to whether the rotation signal 14 and the travelling signal 12 are matched.

**[Table 1]**

| **No.** | **Direction of lower body** | **Direction of upper body** | **Travelling signal with intention of climbing up** | **Rotation signal** | **Determination** | **Brake** |
|---|---|---|---|---|---|---|
| 1 | Uphill | Uphill | Front travelling signal | **Forward-direction rotation signal** | Matched | |
| **2** | **Uphill** | **Uphill** | **Forward travelling signal** | **Reverse-direction rotation signal** | **Mismatched** | **Operation** |
| 3 | Downhill | Downhill | Backward travelling signal | Reverse-direction rotation signal | Matched | |
| **4** | **Downhill** | **Downhill** | **Backward travelling signal** | **Forward-direction rotation signal** | **Mismatched** | **Operation** |
| 5 | Uphill | Downhill | Forward travelling signal | Forward-direction rotation signal | Matched | |
| **6** | **Uphill** | **Downhill** | **Forward travelling signal** | **Reverse-direction rotation signal** | **Mismatched** | **Operation** |
| 7 | Downhill | Uphill | Backward travelling signal | Reverse-direction rotation signal | Matched | |
| **8** | **Downhill** | **Uphill** | **Backward travelling signal** | **Forward-direction rotation signal** | **Mismatched** | **Operation** |

Table 1 represents the cases in which the brake is operated according to whether the travelling signal 12 and the rotation signal 14 are matched.

A situation, in which the construction machine rolls backward, will be described in more detail.

In a case where the driver intends to travel forward, so that the construction machine desires to travel in a pose of moving up an uphill on an inclined plane, when travelling tractive force is weak, the construction machine may roll backward on the inclined plane.

By contrast, in a case where the driver intends to travel backward, so that the construction machine desires to travel in a pose of moving down on the inclined plane, when travelling tractive force is weak, the construction machine may roll backward on the inclined plane.

That is, in the present disclosure, the brake is operated in a situation where the construction machine may roll backward, so that it is possible to prevent the construction machine from rolling backward.

When the rotation signal 14 is not matched with the travelling signal 12, the control unit 20 controls the brake 30 so that the brake 30 is operated until the acceleration signal 16 is input and the tractive force is secured.

That is, the brake 30 is operated, so that the construction machine may not roll backward anymore and may maintain a stopped state. Then, when the acceleration signal 16 is input, the braking of the brake 30 is released, so that the control machine may normally travel.

Here, the acceleration signal 16 is generated when the accelerator pedal is stepped, so that the travelling tractive force of the construction machine may be increased. That is, the increased travelling tractive force of the construction machine becomes larger than force, by which the construction machine rolls backward, so that the control machine may normally travel.

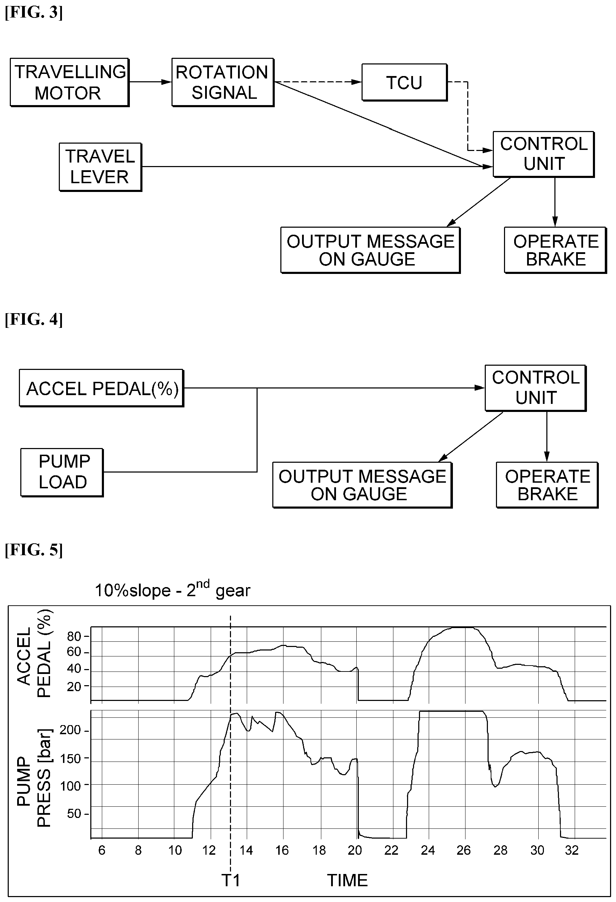

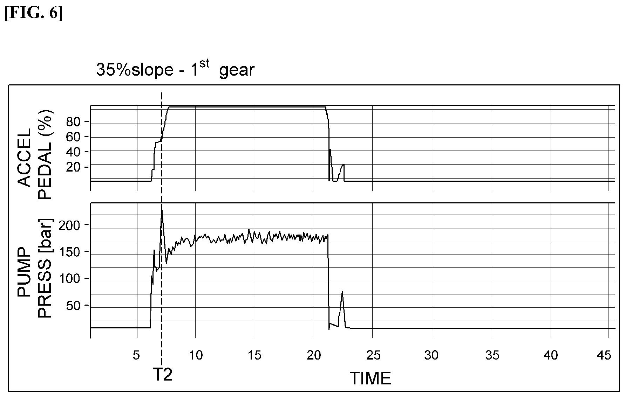

In the meantime, the security of the travelling tractive force means that the accelerator pedal reaches a range from 60% to 80% of a maximum operation range of the accelerator pedal. This will be described in more detail with reference to FIGS. 5 and 6.

FIG. 5 represents an example, in which a gradient of a road surface, on which the construction machine is to travel, is 10%, and a gear shift stage of a transmission is a second stage. FIG. 6 represents an example, in which a gradient of a road surface, on which the construction machine is to travel, is 30%, and a gear shift stage of a transmission is a first stage.

As illustrated in FIGS. 5 and 6, it is represented that a pump load is decreased from a time T1, T2, at which the accelerator pedal reaches 60% to 80% of a maximum operation range of the accelerator pedal after starting to step the accelerator pedal. That is, it is possible to sufficiently secure travelling tractive force from the time T1, T2. Further, in the present disclosure, when the brake is automatically released at the time T1, T2, the construction machine may not roll backward and may stably travel in an intended travelling direction.

On the other hand, in the method of preventing the construction machine from rolling backward according to the exemplary embodiment of the present disclosure and the apparatus for performing the same, the control unit 20 controls the brake 30 to generate braking force even though the driver does not step the brake at a moment at which the construction machine rolls backward, thereby providing convenience and stability of the construction machine.

On the other hand, the method of preventing the construction machine from rolling backward according to the exemplary embodiment of the present disclosure and the apparatus for performing the same do not require a sensor for detecting a pose of the construction machine. For example, when it is detected whether a direction, in which the construction machine heads, is an uphill direction or a valley direction, a gyro sensor and the like are used as the technology known in the art, but in the exemplary embodiment of the present disclosure, the sensor may be excluded. Particularly, the apparatus of preventing the construction machine from rolling backward according to the exemplary embodiment of the present disclosure excludes the sensor, so that it is not necessary to wire various communication cables for connecting the corresponding sensor to the control unit, thereby easily manufacturing the construction machine and decreasing manufacturing cost.

Further, according to the exemplary embodiment of the present disclosure, the technology of the present disclosure is applicable to even a construction machine released in a state where the technology according to the exemplary embodiment of the present disclosure is not applied, so that cost for implementing an operation effect for preventing the construction machine from rolling backward may not be generated and convenience for a driver and stability may be improved.

Further, in the method of preventing the construction machine from rolling backward according to the exemplary embodiment of the present disclosure and the apparatus for performing the same, when the rotation signal 14 is not matched with the travelling signal 12, the brake is operated until a predetermined time elapses. Accordingly, it is possible to secure a time for increasing travelling tractive force in the construction machine. When the travelling tractive force is secured, the construction machine does not roll backward in a direction opposite to an intended direction of the driver.

Further, in the method of preventing the construction machine from rolling backward according to the exemplary embodiment of the present disclosure and the apparatus for performing the same, the predetermined time may be 0.5 second to 1.5 seconds. When the predetermined time is set to 0.5 second or longer, it is possible to secure the travelling tractive force of the construction machine. Further, when the predetermined time is set to less than 1.5 seconds, it is possible to prevent a travelling time of the construction machine from being excessively delayed.

Further, in the method of preventing the construction machine from rolling backward according to the exemplary embodiment of the present disclosure and the apparatus for performing the same, when the rotation signal 14 is not matched with the travelling signal 12, the control unit 20 may output a message inducing the driver to step the brake pedal. The message output 22 may expose an alarm window on a gauge of the construction machine or generate an alarm sound.

Accordingly, in the exemplary embodiment of the present disclosure, it is possible to induce the driver to step the brake pedal. The driver steps the brake pedal, so that it is possible to remove a separation feel when the driver drives the construction machine. That is, the driver may be confused when the brake 30 is operated without an intention of the driver. However, the driver steps the brake pedal by himself/herself, so that the driver may more stably drive the construction machine.

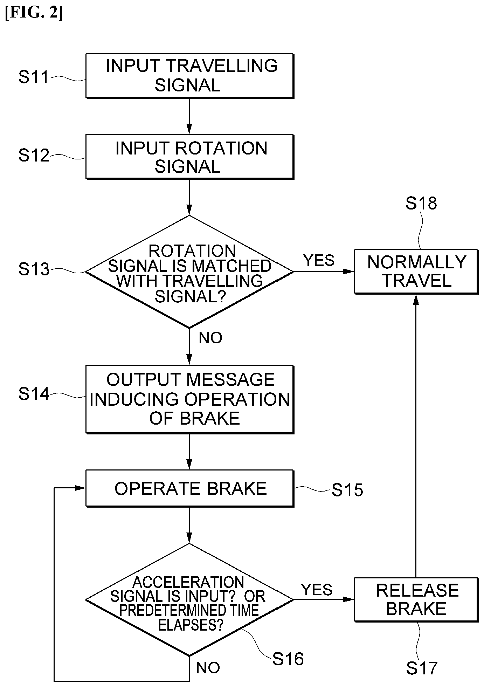

Hereinafter, the method of preventing the construction machine from rolling backward will be described with reference to FIG. 2. FIG. 2 is a flowchart illustrating a method of preventing a construction machine from rolling backward by using the apparatus illustrated in FIG. 1.

A driver may make a construction machine travel by selecting a forward travelling or a backward travelling. According to the selection of the forward travelling or the backward travelling, a travelling signal 12 may be input into the control unit 20 (S11).

Then, the travelling motor is rotated in a specific direction according to the travelling signal 12 and outputs a rotation signal 14. The rotation signal 14 may be input into the control unit 20 as illustrated in FIG. 3 (S12).

The travelling motor may output the rotation signal 14 containing rotation direction information of the travelling motor. More particularly, the rotation signal 14 may be a forward-direction signal when the construction machine travels forward based on the lower body of the construction machine. Similarly, the rotation signal 14 may be a reverse-direction signal when the construction machine travels backward based on the lower body of the construction machine.

The control unit 20 may be a transmission control unit (TCU) or a vehicle control unit (VCU). That is, in the construction machine provided with the TCU, the rotation signal 14 may be input into the TCU, and in the construction machine provided with the VCU, the rotation signal 14 may be input into the VCU.

That is, a forward travelling signal or a backward travelling signal may be input into the control unit 20. Further, a forward-direction rotation signal of the travelling motor or a reverse-direction rotation signal of the travelling motor may be input into the control unit 20.

The control unit 20 determines whether the rotation signal 14 is matched with the travelling signal 12 (S13). That is, the control unit 20 determines whether the travelling motor is operated in an intended direction of the driver. For example, when the travelling signal 12 is the forward travelling signal and the rotation signal 14 is the forward-direction rotation signal, the travelling motor is operated in the intended direction of the driver, and in this case, the control unit 20 may determine that the rotation signal 14 is matched with the travelling signal 12.

By contrast, when the travelling signal 12 is the forward travelling signal and the rotation signal 14 is the reverse-direction rotation signal, the travelling motor is not operated in the intended direction of the driver, and in this case, the control unit 20 may determine that the rotation signal 14 is mismatched to the travelling signal 12.

When the control unit 20 determines that the rotation signal 14 is matched with the travelling signal 12, the construction machine normally travels (S18). That is, in this case, the brake is not operated.

However, when the control unit 20 determines that the rotation signal 14 is mismatched to the travelling signal 12, the brake 30 is operated under the control of the control unit 20 (S15).

That is, when the rotation signal 14 is matched with the travelling signal 12, the construction machine moves in the intended direction of the driver, but when the rotation signal 14 is mismatched to the travelling signal 12, it is determined that the construction machine rolls backward, so that the brake may be automatically operated.

The operation of the brake 30 may be maintained until an acceleration signal 16 is input (S16). When the acceleration signal 16 is not input, the operation of the brake may be continuously maintained.

When the acceleration signal 16 is input into the control unit 20, the control unit 20 may release the operation of the brake 30 (S17) as illustrated in FIG. 4. When the operation of the brake 30 is released, the construction machine may normally travel (S18).

In the meantime, whether a predetermined time elapses after the initiation of the operation of the brake 30 may be determined (S16). Accordingly, the construction machine may secure a time for increasing travelling tractive force. When the predetermined time elapses, it is determined that the travelling tractive force is increased, so that the braking of the brake 30 may be released (S17). When the braking of the brake 30 is released, the construction machine may normally travel (S18).

However, when the control unit 20 determines that the rotation signal 14 is mismatched to the travelling signal 12, the control unit 20 may output a message for inducing the driver to operate the brake 30 with an intension of the driver (S14). Accordingly, when the driver drives the construction machine, the driver may avoid confusion according to the operation of the brake 30 regardless of the intension of the driver.

As described above, according to the present exemplary embodiment, even though the upper body of the construction machine turns on an uphill, it is possible to determine whether the construction machine rolls backward by comparing a desired travelling direction of the driver with an actual rotation direction of the travelling motor.

Particularly, according to the present exemplary embodiment, when a desired travelling direction of the driver on a slope is not matched with an actual travelling direction of the construction machine, that is, it is determined that the construction machine rolls backward, it is possible to automatically and rapidly operate the brake. Accordingly, brake force is applied to the construction machine, thereby suppressing the construction machine from rolling backward on a slope.

**[Explanation of Reference Numerals and Symbols]**

| | |
|---|---|
| 12: Travelling signal | 14: Rotation signal |
| 16: Acceleration signal | 18: Braking signal |
| 20: Control unit | 22: Message output |
| 30: Brake | |

## Claims

1. An apparatus for preventing a construction machine from rolling backward, the apparatus comprising:
a travel lever configured to generate any one travelling signal (12) between a forward travelling signal and a backward travelling signal;
a travelling motor configured to generate any one rotation signal (14) between a forward-direction rotation signal and a reverse-direction rotation signal;
an accelerator pedal configured to generate an acceleration signal (16);
a brake (30) configured to apply braking to the traveling motor; and
a control unit (20) configured to control the brake (30),
wherein the travelling signal (12), the rotation signal (14), and the acceleration signal (16) are input into the control unit (20), and when it is determined that the rotation signal (14) is mismatched to the travelling signal (12), the control unit (20) controls the brake (30) so that the brake (30) is operated, and when travelling tractive force is secured, the control unit (20) controls the brake (30) so that the operation of the brake (30) is released,
**characterised in that**
when the rotation signal is not matched with the travelling signal, the control unit (20) outputs a message inducing stepping of a brake pedal.

2. The apparatus of claim 1, wherein the security of the travelling tractive force includes that the accelerator pedal reaches a range from 60% to 80% of a maximum operation range of the accelerator pedal.

3. The apparatus of claim 1, further comprising:
a rotation detecting sensor configured to output the rotation direction as the rotation signal (14).

4. The apparatus of claim 1, wherein when the rotation signal is not matched with the travelling signal, the control unit (20) makes the brake be operated until a predetermined time elapses.

5. The apparatus of claim 4, wherein the predetermined time is 0.5 second to 1.5 seconds.

6. The apparatus of claim 1, wherein in the construction machine, a lower travelling body is a wheel type.

7. A method of preventing a construction machine from rolling backward, the method comprising:
detecting a travelling direction of a construction machine;
confirming whether the detected travelling direction is an intended travelling direction of a driver of the construction machine; and
controlling the brake so that the brake is operated when the detected travelling direction is not matched with the intended travelling direction of the driver, and controlling the brake so that the operation of the brake is released when travelling tractive force is secured
**characterised in that**
when the detected travelling direction is not matched with the intended travelling direction of the driver, outputting a message inducing stepping of the brake pedal.

8. The method of claim 7, wherein the security of the travelling tractive force includes that the accelerator pedal reaches a range from 60% to 80% of a maximum operation range of the accelerator pedal.

9. The method of claim 7, wherein the detecting of the travelling direction of the construction machine includes detecting a rotation direction of a travelling motor.

10. The method of claim 7, further comprising:
when the detected travelling direction is not matched with the intended travelling direction of the driver, operating the brake until a predetermined time elapses.

11. The method of claim 7, wherein in the construction machine, a lower travelling body is a wheel type.

## Patentansprüche

1. Vorrichtung zur Verhinderung des Rückwärtsrollens einer Baumaschine, wobei die Vorrichtung Folgendes umfasst:
einen Fahrhebel, der so eingerichtet ist, dass er ein beliebiges Fahrsignal (12) zwischen einem Vorwärtsfahrsignal und einem Rückwärtsfahrsignal erzeugt;
einen Fahrmotor, der so eingerichtet ist, dass er ein beliebiges Drehsignal (14) zwischen einem Vorwärtsdrehungssignal und einem Rückwärtsdrehungssignal erzeugt;
ein Gaspedal, das so eingerichtet ist, dass es ein Beschleunigungssignal (16) erzeugt;
eine Bremse (30), die so eingerichtet ist, dass sie den Fahrmotor bremst; und
eine Steuereinheit (20), die so eingerichtet ist, dass sie die Bremse (30) steuert,
wobei das Fahrsignal (12), das Drehsignal (14) und das Beschleunigungssignal (16) in die Steuereinheit (20) eingegeben werden, und, wenn festgestellt wird, dass das Drehsignal (14) nicht mit dem Fahrsignal (12) übereinstimmt, die Steuereinheit (20) die Bremse (30) so steuert, dass die Bremse (30) betätigt wird, und, wenn die Fahrvortriebskraft erreicht ist, die Steuereinheit (20) die Bremse (30) so steuert, dass die Bremse (30) nicht mehr betätigt wird, **dadurch gekennzeichnet, dass**
wenn das Drehsignal nicht mit dem Fahrsignal übereinstimmt, die Steuereinheit (20) eine Meldung ausgibt, mit der veranlasst wird, dass auf ein Bremspedal getreten wird.

2. Vorrichtung nach Anspruch 1, wobei das Erreichen der Fahrvortriebskraft umfasst, dass das Gaspedal einen Bereich zwischen 60% und 80% eines maximalen Arbeitsbereichs des Gaspedals erreicht.

3. Vorrichtung nach Anspruch 1, ferner umfassend:
einen Drehrichtungserkennungssensor, der so eingerichtet ist, dass er die Drehrichtung als das Drehsignal (14) ausgibt.

4. Vorrichtung nach Anspruch 1, wobei die Steuereinheit (20), wenn das Drehsignal nicht mit dem Fahrsignal übereinstimmt, dafür sorgt, dass die Bremse solange betätigt wird, bis eine vorgegebene Zeit abläuft.

5. Vorrichtung nach Anspruch 4, wobei die vorgegebene Zeit 0,5 Sekunden bis 1,5 Sekunden beträgt.

6. Vorrichtung nach Anspruch 1, wobei ein unteres Fahrwerk bei der Baumaschine ein Radfahrwerk ist.

7. Verfahren zur Verhinderung des Rückwärtsrollens einer Baumaschine, wobei das Verfahren Folgendes umfasst:
Erkennen einer Fahrtrichtung einer Baumaschine;
Bestätigen, ob die erkannte Fahrtrichtung eine beabsichtigte Fahrtrichtung eines Fahrers der Baumaschine ist; und
Steuern der Bremse derart, dass die Bremse betätigt wird, wenn die erkannte Fahrtrichtung nicht mit der beabsichtigten Fahrtrichtung des Fahrers übereinstimmt, und Steuern der Bremse derart, dass die Bremse nicht mehr betätigt wird, wenn die Fahrvortriebskraft erreicht ist,
**dadurch gekennzeichnet, dass**
wenn die erkannte Fahrtrichtung nicht mit der beabsichtigten Fahrtrichtung des Fahrers übereinstimmt, Ausgeben einer Meldung, mit der veranlasst wird, dass auf das Bremspedal getreten wird.

8. Verfahren nach Anspruch 7, wobei das Erreichen der Fahrvortriebskraft umfasst, dass das Gaspedal einen Bereich zwischen 60% und 80% eines maximalen Arbeitsbereichs des Gaspedals erreicht.

9. Verfahren nach Anspruch 7, wobei das Erkennen der Fahrtrichtung der Baumaschine ein Erkennen einer Drehrichtung eines Fahrmotors umfasst.

10. Verfahren nach Anspruch 7, ferner umfassend:
wenn die erkannte Fahrtrichtung nicht mit der beabsichtigten Fahrtrichtung des Fahrers übereinstimmt, Betätigen der Bremse, bis eine vorgegebene Zeit abläuft.

11. Verfahren nach Anspruch 7, wobei ein unteres Fahrwerk bei der Baumaschine ein Radfahrwerk ist.

## Revendications

1. Appareil pour empêcher une machine de construction de reculer, l'appareil comprenant :
un levier de déplacement configuré pour générer un quelconque signal de déplacement (12) entre un signal de déplacement vers l'avant et un signal de déplacement vers l'arrière ;
un moteur de déplacement configuré pour générer un quelconque signal de rotation (14) entre un signal de rotation de direction en marche avant et un signal de rotation de direction en marche arrière ;
une pédale d'accélérateur configurée pour générer un signal d'accélération (16) ;
un frein (30) configuré pour appliquer un freinage au moteur de déplacement ; et
une unité de commande (20) configurée pour commander le frein (30),
dans lequel le signal de déplacement (12), le signal de rotation (14), et le signal d'accélération (16) sont fournis en entrée dans l'unité de commande (20), et lorsqu'il est déterminé que le signal de rotation (14) ne concorde pas avec le signal de déplacement (12), l'unité de commande (20) commande le frein (30) de sorte que le frein (30) soit actionné, et lorsqu'une force de traction de déplacement est sécurisée, l'unité de commande (20) commande le frein (30) de sorte que l'actionnement du frein (30) soit relâché, **caractérisé en ce que**
lorsque le signal de rotation ne concorde pas avec le signal de déplacement, l'unité de commande (20) fournit en sortie un message provoquant l'enfoncement d'une pédale de frein.

2. Appareil selon la revendication 1, dans lequel la sécurité de la force de traction de déplacement inclut le fait que la pédale d'accélérateur atteint une plage de 60 % à 80 % d'une plage d'actionnement maximal de la pédale d'accélérateur.

3. Appareil selon la revendication 1, comprenant en outre :
un capteur de détection de rotation configuré pour fournir en sortie la direction de rotation en tant que signal de rotation (14).

4. Appareil selon la revendication 1, dans lequel, lorsque le signal de rotation ne concorde pas avec le signal de déplacement, l'unité de commande (20) fait actionner le frein jusqu'à ce qu'un temps prédéterminé s'écoule.

5. Appareil selon la revendication 4, dans lequel le temps prédéterminé est de 0,5 seconde à 1,5 seconde.

6. Appareil selon la revendication 1, dans lequel dans la machine de construction, un corps de déplacement inférieur est un type de roue.

7. Procédé pour empêcher une machine de construction de reculer, le procédé comprenant :
la détection d'une direction de déplacement d'une machine de construction ;
le fait de confirmer si la direction de déplacement détectée est une direction de déplacement prévue d'un conducteur de la machine de construction ; et
la commande du frein de sorte que le frein soit actionné lorsque la direction de déplacement détectée ne concorde pas avec la direction de déplacement prévue du conducteur, et la commande du frein de sorte que l'actionnement du frein soit relâché lorsqu'une force de traction de déplacement est sécurisée
**caractérisé en ce que**
lorsque la direction de déplacement détectée ne concorde pas avec la direction de déplacement prévue du conducteur, la fourniture en sortie d'un message provoquant un enfoncement de la pédale de frein.

8. Procédé selon la revendication 7, dans lequel la sécurité de la force de traction de déplacement inclut le fait que la pédale d'accélérateur atteint une plage de 60 % à 80 % d'une plage d'actionnement maximal de la pédale d'accélérateur.

9. Procédé selon la revendication 7, dans lequel la détection de la direction de déplacement de la machine de construction inclut la détection d'une direction de rotation d'un moteur de déplacement.

10. Procédé selon la revendication 7, comprenant en outre :
lorsque la direction de déplacement détectée ne concorde pas avec la direction de déplacement prévue du conducteur,
l'actionnement du frein jusqu'à ce qu'un temps prédéterminé s'écoule.

11. Procédé selon la revendication 7, dans lequel dans la machine de construction, un corps de déplacement inférieur est un type de roue.
